# EUROPEAN PATENT APPLICATION

(11) **EP 4 783 374 A1**
(43) Date of publication of application: **29.07.2026**
(21) Application number: 24950908.4
(22) Date of filing: 05.12.2024
(51) Int. Cl.: H01R 31/06, H01R 13/639, B60L 53/16

(54) **CHARGING ADAPTER**

(71) Applicant: DELTA ELECTRONICS, INC., Taoyuan City 333 (TW)
(72) Inventor: The designation of the inventor has not yet been filed
(74) Representative: Nederlandsch Octrooibureau
(86) International application number: PCT/CN2024/137055
(87) International publication number: WO 2026/118016

(57) **Abstract**

A charging adapter includes an adapter main body, as well as a first latch, a second latch and a synchronizing mechanism disposed on the adapter main body. The adapter main body includes a first electrical connector and a second electrical connector. The first and second electrical connectors are disposed on two opposite ends of the adapter main body and are configured to be connected to a first and a second external connector, respectively. The first latch includes a button and an engaging structure. The engaging structure is connected to the button and is configured to fixedly engage the first external connector. The second latch is configured to fixedly engage the second external connector. The synchronizing mechanism is connected to the first and second latches. The first and second latches are configured to fixedly engage and disengage the first and second external connectors synchronously via the synchronizing mechanism.

## Description

### BACKGROUND

### Technical Field

The present disclosure relates to a charging adapter.

### Description of Related Art

There are various different specifications for the charging guns and the charging connectors of electric vehicles (EVs) currently on the market. In order to allow charging equipment to charge different vehicles, it is necessary to use adapters. However, most of the currently available adapters are designed to use two independent manual locking mechanisms, one for the adapter and the vehicle, and the other for the adapter and the charging gun. This creates inconvenience for the user and makes it difficult to prevent the charging gun from being unplugged while the vehicle is charging. The charging gun being unplugged during the charging process may cause damage to both the charging gun and the vehicle.

### SUMMARY

In view of the foregoing, an objective of the present disclosure is to provide an improved charging adapter to resolve the issues of prior art set forth above.

In accordance with some embodiments of the present disclosure, a charging adapter includes an adapter main body, a first latch, a second latch and a synchronizing mechanism. The adapter main body includes a first electrical connector and a second electrical connector. The first electrical connector and the second electrical connector are disposed on two opposite ends of the adapter main body and are configured to be connected to a first external connector and a second external connector, respectively. The first latch is movably disposed on the adapter main body and includes a button and an engaging structure. The engaging structure is connected to the button and is configured to fixedly engage the first external connector. The second latch is movably disposed on the adapter main body and is configured to fixedly engage the second external connector. The synchronizing mechanism is disposed on the adapter main body and is connected to the button of the first latch and the second latch. The first latch and the second latch are configured to fixedly engage and disengage the first external connector and the second external connector in a synchronous manner via the synchronizing mechanism.

In one or more embodiments of the present disclosure, the synchronizing mechanism includes at least one translational slidable component. The translational slidable component is connected to the second latch and is configured to translate in response to the button of the first latch being pressed. The translational slidable component, when translating, causes the second latch to translate.

In one or more embodiments of the present disclosure, the first latch is located on a first side of the second electrical connector. The second latch is located on a second side of the second electrical connector. The second side is opposite to the first side. The translational slidable component extends from the first side to the second side of the second electrical connector and is connected to the button of the first latch and the second latch.

In one or more embodiments of the present disclosure, the second latch and the translational slidable component collectively form a J-shaped structure.

In one or more embodiments of the present disclosure, the translational slidable component includes a first slider and a second slider. The first slider and the second slider are connected to the button and the second latch, respectively, and each have an inclined surface. The inclined surfaces of the first slider and the second slider abut each other. The first slider is configured to slide along a first direction in response to the button of the first latch being pressed. The second slider is configured to slide along a second direction in response to sliding motion of the first slider. The second direction is at an angle to the first direction.

In one or more embodiments of the present disclosure, the second electrical connector has a first side, a second side and a third side. The second side is opposite to the first side. The third side adjoins the first side and the second side. The first latch is disposed on the first side. The second latch is disposed on the third side. The second direction is substantially perpendicular to the first direction.

In one or more embodiments of the present disclosure, the first latch and the second latch are located on the same side of the second electrical connector. The synchronizing mechanism includes a rotatable component. The rotatable component includes a pivot portion, a first swing arm and a second swing arm. The first swing arm and the second swing arm are connected to the button of the first latch and the second latch, respectively, and are located on different sides of the pivot portion.

In one or more embodiments of the present disclosure, the first latch and the second latch are located on different sides of the second electrical connector. The synchronizing mechanism includes a slidable component and a rotatable component. The rotatable component includes a pivot portion and a swing arm. The swing arm is connected to the second latch and is connected to the button of the first latch via the slidable component.

In one or more embodiments of the present disclosure, the synchronizing mechanism is arranged along a periphery of the second electrical connector.

In one or more embodiments of the present disclosure, the first latch is an integrally formed component, and the engaging structure and the button are located on two opposite ends of the first latch.

In one or more embodiments of the present disclosure, the second electrical connector has a socket and a side opening. The socket is configured to receive the second external connector. The side opening communicates with the socket. The second latch is configured to extend into the socket via the side opening and fixedly engage the second external connector.

In one or more embodiments of the present disclosure, the charging adapter further includes an elastic component disposed on the adapter main body. The elastic component is connected to the second latch and is configured to provide a force to push the second latch into the side opening.

In sum, the charging adapter of the present disclosure includes a first latch for fixedly engaging the first external connector, a second latch for fixedly engaging the second external connector, and a synchronizing mechanism connected to both the first latch and the second latch. The synchronizing mechanism can drive the first latch and the second latch to operate synchronously (fixedly engaging the two external connectors simultaneously, or disengaging the two external connectors simultaneously). This not only makes the charging adapter of the present disclosure convenient to operate, but also helps to prevent the charging gun using the charging adapter from being unplugged during the charging process.

### BRIEF DESCRIPTION OF THE DRAWINGS

To make the objectives, features, advantages, and embodiments of the present disclosure, including those mentioned above and others, more comprehensible, descriptions of the accompanying drawings are provided as follows.
Fig. 1 illustrates a schematic exploded view of a charging system in accordance with an embodiment of the present disclosure.
Fig. 2 illustrates a schematic cross-sectional view of the charging system shown in Fig. 1.
Fig. 3 illustrates a front view (hidden lines included) of the charging adapter of the charging system shown in Fig. 1.
Fig. 4 illustrates a top view (hidden lines included) of a charging system in accordance with another embodiment of the present disclosure.
Fig. 5 illustrates a front view (hidden lines included) of the charging adapter of the charging system shown in Fig. 4.
Fig. 6 illustrates a schematic cross-sectional view of a charging system in accordance with another embodiment of the present disclosure.
Fig. 7 illustrates a schematic cross-sectional view of a charging system in accordance with another embodiment of the present disclosure.

The reference numerals in the drawings are as below:
12, 12A, 12B, 12C: charging adapter
13: charging gun
15: device to be charged
17: elastic component
19, 19A, 19B, 19C: charging system
20: adapter main body
21: first electrical connector
22: second electrical connector
23: socket
24: side opening
29: second latch
30: first latch
34: pivot
35: button
37: engaging structure
50, 50A, 50B, 50C: synchronizing mechanism
51: first slider
52: second slider
53: translational slidable component
53B, 53C: slidable component
54B, 54C: rotatable component
55: pivot portion
56, 57: inclined surface
58: swing arm
58C: first swing arm
59C: second swing arm
D1: first direction
D2: second direction
E1: first external connector
E2: second external connector
K1: engaging feature
K2: hole
S1: first side
S2: second side
S3: third side

### DETAILED DESCRIPTION

For the completeness of the description of the present disclosure, reference is made to the accompanying drawings and the various embodiments described below. Various features in the drawings are not drawn to scale and are provided for illustration purposes only. To provide full understanding of the present disclosure, various practical details will be explained in the following descriptions. However, a person with an ordinary skill in relevant art should realize that the present disclosure can be implemented without one or more of the practical details. Therefore, the present disclosure is not to be limited by these details.

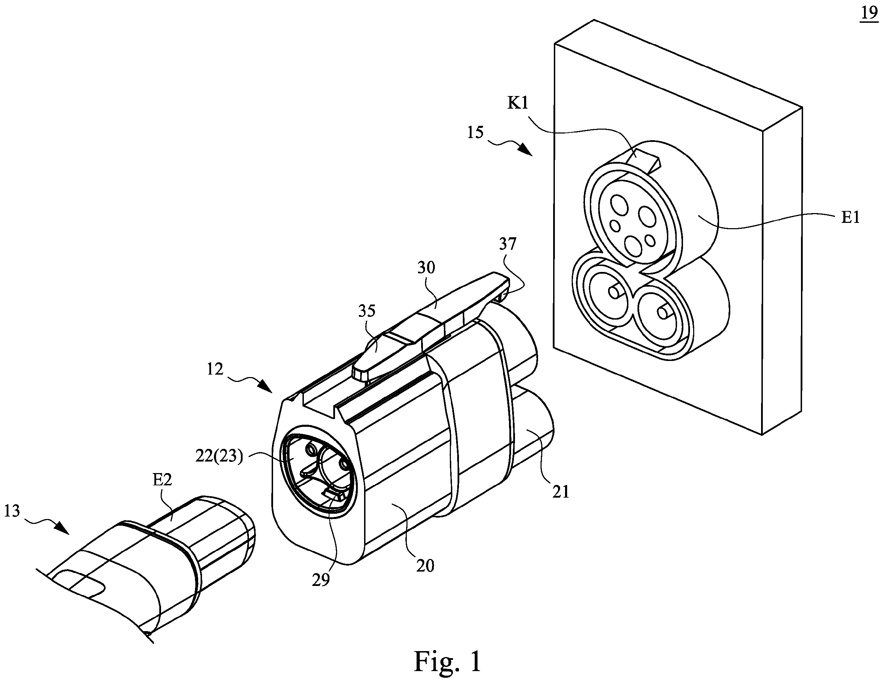

Reference is made to Fig. 1. Fig. 1 illustrates a schematic exploded view of a charging system 19 in accordance with an embodiment of the present disclosure. As shown in the figure, the charging system 19 includes a charging adapter 12, a charging gun 13 and a device to be charged 15 (e.g., an electric vehicle). The charging gun 13 and the device to be charged 15 have electrical connectors of different specifications. The charging adapter 12 is connected between the charging gun 13 and the device to be charged 15 to enable the charging gun 13 to connect to and charge the device to be charged 15. The charging adapter 12 includes an adapter main body 20. The adapter main body 20 includes a first electrical connector 21 and a second electrical connector 22. The first electrical connector 21 and the second electrical connector 22 are disposed on two opposite ends of the adapter main body 20, and are configured to be connected to a first external connector E1 and a second external connector E2, respectively. In the present embodiment, the first external connector E1 and the second external connector E2 are the connectors of the device to be charged 15 and the charging gun 13, respectively, and have different specifications. For example, the first external connector E1 can be a connector complying with GBT, J1772, or CCS1 standard, and the second external connector E2 can be a connector complying with NACS, CCS2, or Type 2 (IEC 62196-2 Type 2) standard. Correspondingly, the first electrical connector 21 of the adapter main body 20 can be a connector complying with GBT, J1772, or CCS1 standard, and the second electrical connector 22 can be a connector complying with NACS, CCS2, or Type 2 standard. The adapter main body 20 can include a housing, as well as conductive pins and circuitry disposed in the housing.

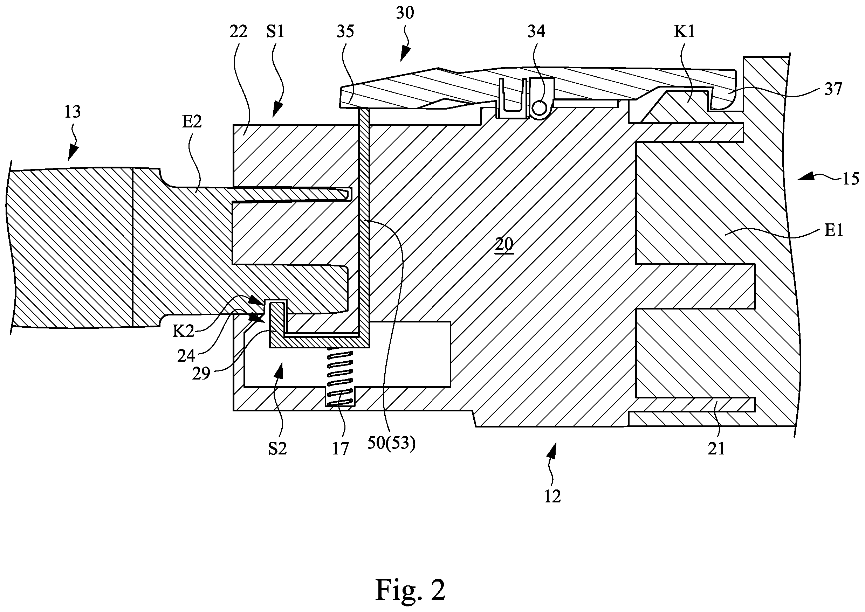

Reference is made additionally to Fig. 2. Fig. 2 illustrates a schematic cross-sectional view of the charging system 19 shown in Fig. 1. As shown in Figs. 1 and 2, the charging adapter 12 further includes a first latch 30. The first latch 30 is movably disposed on the adapter main body 20 and includes a button 35 and an engaging structure 37. The engaging structure 37 is connected to the button 35 and is configured to fixedly engage the first external connector E1. In the present embodiment, the first external connector E1 includes an engaging feature K1. The engaging feature K1 is disposed on an upper side of the first external connector E1. The engaging structure 37 of the first latch 30 can fixedly engage the engaging feature K1 to keep the charging adapter 12 connected to the first external connector E1. The engaging feature K1 can be a boss as shown in the figure, or can be a groove, a hole or any other suitable structures.

As shown in Figs. 1 and 2, in the present embodiment, the first latch 30 is pivotally connected to the adapter main body 20. The button 35 and the engaging structure 37 are located on two sides of a pivot 34. A surface of the button 35 away from the adapter main body 20 is configured to be pressed by a user. When the button 35 is pressed, the engaging structure 37 connected to the button 35 rotates away from the adapter main body 20 and become separated from the engaging feature K1 of the first external connector E1, thereby allowing the charging adapter 12 to be separated from the first external connector E1. In some embodiments, the first latch 30 is an integrally formed component, and the engaging structure 37 and the button 35 are located on two opposite ends of the first latch 30. In some embodiments, a torsion spring (not shown) is disposed around the pivot 34 of the first latch 30. The torsion spring can provide a torque to rotate the engaging structure 37 towards the adapter main body 20.

As shown in Fig. 2, the charging adapter 12 further includes a second latch 29. The second latch 29 is movably disposed on the adapter main body 20 and is configured to fixedly engage the second external connector E2. In the present embodiment, the second external connector E2 has a hole K2. The hole K2 is disposed on an outer peripheral surface of the second external connector E2. The second latch 29 can extend into the hole K2 to fixedly engage the second external connector E2, thereby keeping the charging adapter 12 connected to the second external connector E2. In the present embodiment, the second latch 29 is disposed in the interior of the adapter main body 20. The second electrical connector 22 can have a socket 23 and a side opening 24. The socket 23 is configured to receive the second external connector E2. The side opening 24 is disposed on a lateral surface of the socket 23 and communicates with the socket 23. The second latch 29 is configured to extend into the socket 23 via the side opening 24, or extend into the hole K2 of the second external connector E2 to fixedly engage the second external connector E2.

As shown in Fig. 2, the charging adapter 12 further includes a synchronizing mechanism 50. The synchronizing mechanism 50 is disposed on the adapter main body 20 and is connected to the button 35 of the first latch 30 and the second latch 29. The first latch 30 and the second latch 29 can fixedly engage the first external connector E1 and the second external connector E2, respectively, in a synchronous manner via the synchronizing mechanism 50, and can release the first external connector E1 and the second external connector E2, respectively, in a synchronous manner via the synchronizing mechanism 50. Compared to existing charging adapters, the charging adapter 12 of the present disclosure is convenient to operate. Synchronous engagement or disengagement of the first latch 30 with the first external connector E1 and the second latch 29 with the second external connector E2 can be achieved by operating a single button 35. Furthermore, a lock can be attached to the first latch 30 or the second latch 29. Since the first latch 30 and the second latch 29 operate synchronously, the lock can simultaneously fix the position of the first latch 30 or the second latch 29. Consequently, the charging gun 13 can be prevented from being unplugged during charging, providing protection for the charging gun 13 and the device to be charged 15.

As shown in Fig. 2, in some embodiments, the synchronizing mechanism 50 includes a translational slidable component 53. One end of the translational slidable component 53 is connected to the button 35 of the first latch 30, and another end of the translational slidable component 53 is connected to the second latch 29. The translational slidable component 53 is configured to translate in response to the button 35 of the first latch 30 being pressed or released (e.g., translating downward when the button 35 is pressed, and translating upward back to the position shown in Fig. 2 after release). The translational slidable component 53, when translating, causes the second latch 29 to translate synchronously, such that the second latch 29 enter or exit the side opening 24 of the second electrical connector 22 and the hole K2 of the second external connector E2. In some embodiments, the synchronizing mechanism 50 and the second latch 29 are disposed in the interior of the adapter main body 20, which has a cavity that allows for movement of the synchronizing mechanism 50 and the second latch 29. An upper end of the translational slidable component 53 may protrude from an outer surface of the adapter main body 20 and abut an inner side of the button 35 of the first latch 30. In some embodiments, the translational slidable component 53 and the second latch 29 can be a single, integrally formed structure.

As shown in Fig. 2, in some embodiments, the charging adapter 12 further includes an elastic component 17 disposed on the adapter main body 20. The elastic component 17 is indirectly or directly connected to the second latch 29 and is configured to provide a force to push the second latch 29 into the side opening 24 of the second electrical connector 22. The elastic component 17 can help the second latch 29 and the synchronizing mechanism 50 restore their positions automatically. Once the button 35 is released, the second latch 29 can automatically move into the side opening 24 of the second electrical connector 22 as driven by the elastic component 17. The elastic component 17 can be a coil spring, a flat spring, or any other suitable elastic objects. In the present embodiment, the elastic component 17 is a compression spring. One end of the elastic component 17 is fixedly attached to an inner wall of the housing of the adapter main body 20, and another end of the elastic component 17 is fixedly attached to the translational slidable component 53.

As shown in Fig. 2, in some embodiments, the first latch 30 is located on a first side S1 of the second electrical connector 22, and the second latch 29 is located on a second side S2 of the second electrical connector 22. The second side S2 is opposite to the first side S1. The translational slidable component 53 extends from the first side S1 to the second side S2 of the second electrical connector 22, and is connected to the button 35 of the first latch 30 and the second latch 29. In some embodiments, the second latch 29 and the translational slidable component 53 collectively form a J-shaped structure.

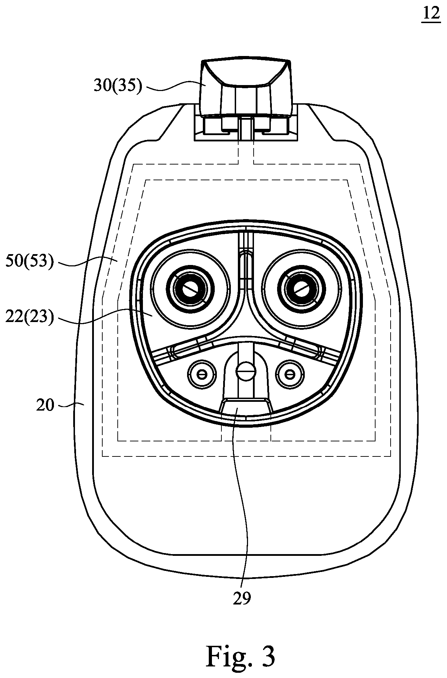

Reference is made to Fig. 3. Fig. 3 illustrates a front view (hidden lines included) of the charging adapter 12 of the charging system 19 shown in Fig. 1. As shown, in some embodiments, the synchronizing mechanism 50 (represented by dashed lines) is arranged along a periphery of the second electrical connector 22 to avoid the circuitry connected to the second electrical connector 22. In the present embodiment, the translational slidable component 53 (represented by dashed lines) is arranged along the periphery of the second electrical connector 22. The translational slidable component 53 can include a ring-shaped structure completely surrounding the second electrical connector 22 as shown. Alternatively, the translational slidable component 53 can include a C-shaped structure partially surrounding the second electrical connector 22.

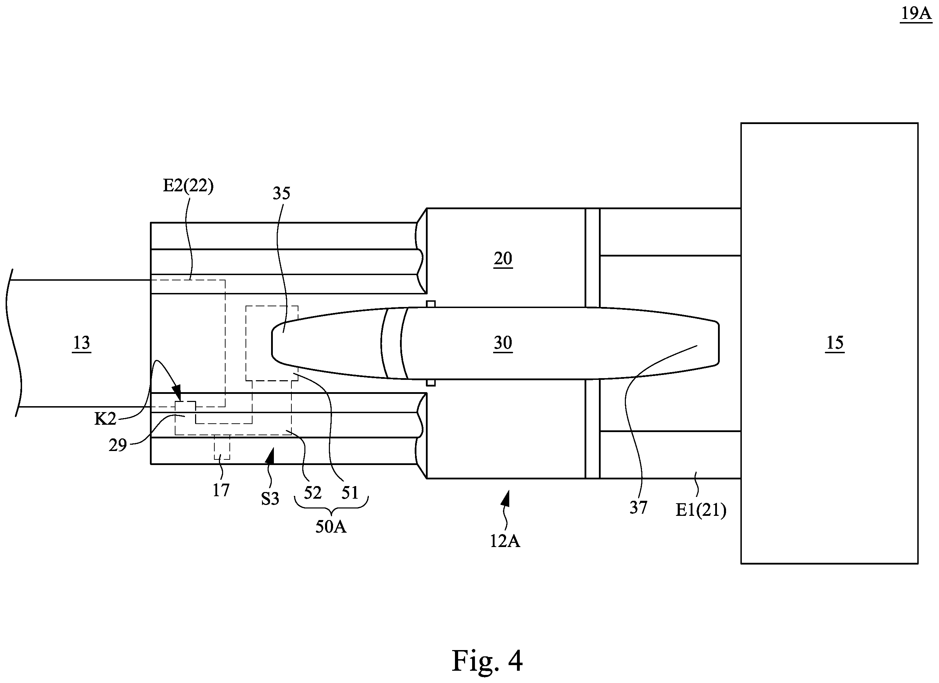

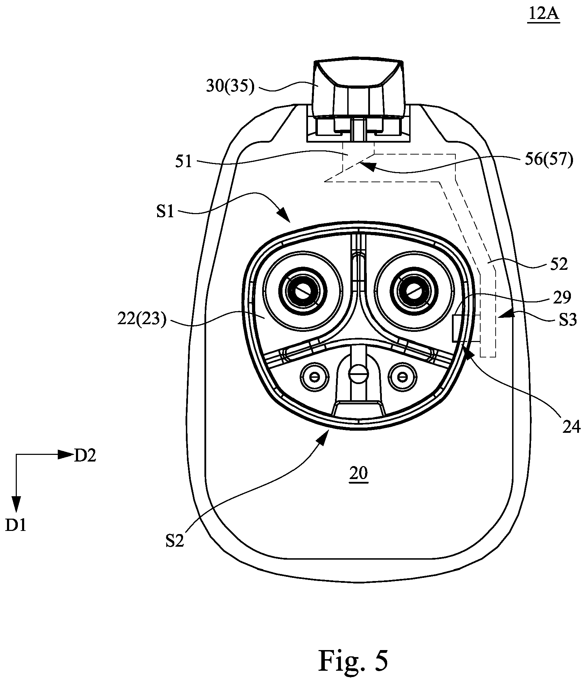

Reference is made to Figs. 4 and 5. Fig. 4 illustrates a top view (hidden lines included) of a charging system 19A in accordance with another embodiment of the present disclosure, and Fig. 5 illustrates a front view (hidden lines included) of the charging adapter 12A of the charging system 19A shown in Fig. 4. The charging adapter 12A of the present embodiment differs from the previous embodiment in that the synchronizing mechanism 50A includes multiple translational slidable components, including a first slider 51 and a second slider 52 (represented by dashed lines). The first slider 51 and the second slider 52 are stacked and are connected to the button 35 of the first latch 30 and the second latch 29, respectively. The first slider 51 and the second slider 52 have an inclined surface 56 and an inclined surface 57, respectively. The two inclined surface 56 and 57 abut each other. The first slider 51 is configured to slide along a first direction D1 in response to the button 35 of the first latch 30 being pressed. The second slider 52 is configured to slide along a second direction D2 in response to sliding motion of the first slider 51. The second direction D2 is at an angle to (i.e., not parallel to) the first direction D1. When the hole K2 of the second electrical connector 22 is located on a lateral side of the second electrical connector 22, the synchronizing mechanism 50A of the present embodiment can cause the second latch 29 to slide in a direction other than the up-down direction (e.g., slide in the left-right direction), achieving the same synchronous operation as the previous embodiment.

As shown in Figs. 4 and 5, in some embodiments, the second electrical connector 22 has a first side S1, a second side S2 and a third side S3. The second side S2 is opposite to the first side S1, and the third side S3 adjoins the first side S1 and the second side S2 (i.e., the third side S3 is located on a lateral side of the first side S1 and the second side S2). The first latch 30 is disposed on the first side S1 of the second electrical connector 22, and the second latch 29 is disposed on the third side S3 of the second electrical connector 22. The second slider 52 extends to the third side S3 of the second electrical connector 22 and is connected to the second latch 29. The second direction D2 along which the second slider 52 slides is substantially perpendicular to the first direction D1 along which the first slider 51 slides. The second latch 29 can slide along the second direction D2 with the second slider 52 to exit the side opening 24 on the third side S3 of the second electrical connector 22 and the corresponding hole K2, or slide along the opposite direction of the second direction D2 to enter the side opening 24 and the hole K2. In some embodiments, the second slider 52 and the second latch 29 can be a single, integrally formed structure.

As shown in Figs. 4 and 5, in some embodiments, the charging adapter 12B further includes an elastic component 17 (represented by dashed lines) disposed on the adapter main body 20. The elastic component 17 is indirectly or directly connected to the second latch 29 and can help the second latch 29 and the synchronizing mechanism 50A restore their positions automatically (e.g., driving the second slider 52 to slide in the opposite direction of the second direction D2, which in turn drives the first slider 51 to slide in the opposite direction of the first direction D1). In the present embodiment, the elastic component 17 is a compression spring. One end of the elastic component 17 is fixedly attached to the inner wall of the housing of the adapter main body 20, and another end of the elastic component 17 is fixedly attached to the second slider 52.

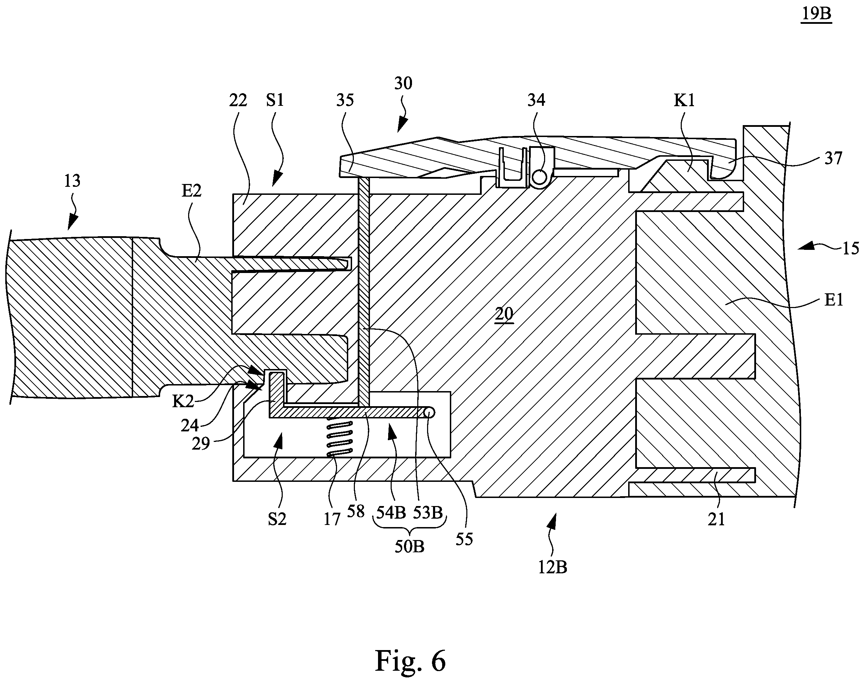

Reference is made to Fig. 6. Fig. 6 illustrates a schematic cross-sectional view of a charging system 19B in accordance with another embodiment of the present disclosure. In the present embodiment, the first latch 30 and the second latch 29 of the charging adapter 12B are located on different sides of the second electrical connector 22, specifically on the first side S1 and second side S2 of the second electrical connector 22, in which is the first side S1 is opposite to the second side S2. The synchronizing mechanism 50B is disposed in the interior of the adapter main body 20 and includes a slidable component 53B and a rotatable component 54B. The rotatable component 54B is disposed on the second side S2 of the second electrical connector 22 and includes a pivot portion 55 and a swing arm 58. The swing arm 58 can rotate around the pivot portion 55, and the swing arm 58 is connected to the second latch 29. The swing arm 58 is also connected to the button 35 of the first latch 30 via the slidable component 53B, which extends from the first side S1 to the second side S2 of the second electrical connector 22.

As shown in Fig. 6, in some embodiments, the charging adapter 12B further includes an elastic component 17. The elastic component 17 is indirectly or directly connected to the second latch 29 and can help the second latch 29 and the synchronizing mechanism 50B to restore their positions automatically. In the present embodiment, the elastic component 17 is a compression spring. One end of the elastic component 17 is fixedly attached to the inner wall of the housing of the adapter main body 20, and another end of the elastic component 17 is fixedly attached to the swing arm 58 of the rotatable component 54B. In other embodiments, the elastic component can also be a torsion spring disposed around the pivot portion 55 of the rotatable component 54B.

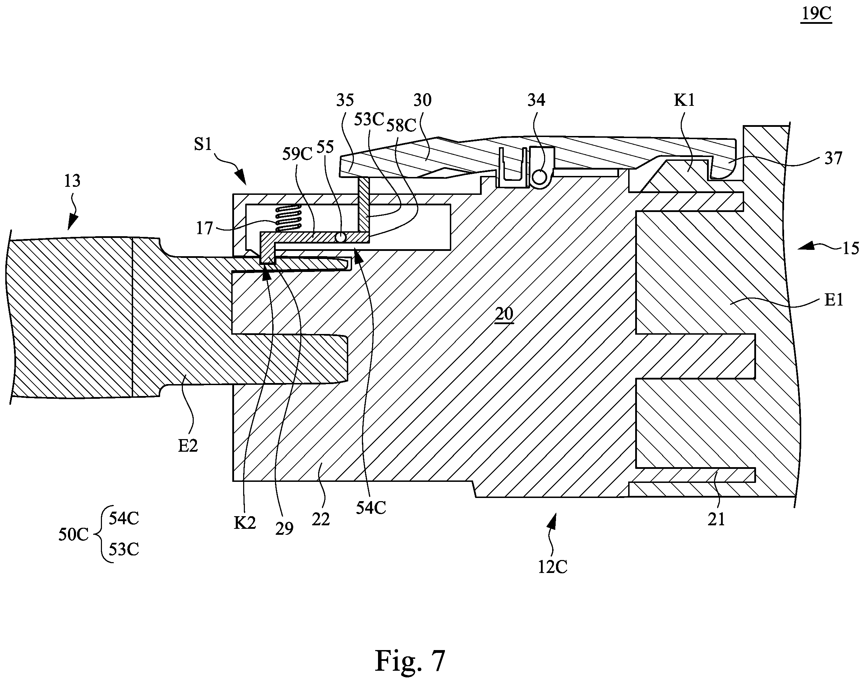

Reference is made to Fig. 7. Fig. 7 illustrates a schematic cross-sectional view of a charging system 19C in accordance with another embodiment of the present disclosure. In the present embodiment, the first latch 30 and the second latch 29 of the charging adapter 12C are located on the same side of the second electrical connector 22, for example, on the first side S1 of the second electrical connector 22, to correspond to the hole K2 located on the first side S1 of the second electrical connector 22. The synchronizing mechanism 50C is disposed in the interior of the adapter main body 20 and includes a slidable component 53C and a rotatable component 54C. The rotatable component 54C is disposed on the first side S1 of the second electrical connector 22 and includes a pivot portion 55, a first swing arm 58C and a second swing arm 59C. The first swing arm 58C and the second swing arm 59C are located on different sides of the pivot portion 55 and can rotate around the pivot portion 55 synchronously. The first swing arm 58C is connected to the button 35 of the first latch 30 via the slidable component 53C, and the second swing arm 59C is connected to the second latch 29. In some embodiments, the charging adapter 12C further includes an elastic component 17, whose function and structure are similar to those of the aforementioned elastic component 17.

In sum, the charging adapter of the present disclosure includes a first latch for fixedly engaging the first external connector, a second latch for fixedly engaging the second external connector, and a synchronizing mechanism connected to both the first latch and the second latch. The synchronizing mechanism can drive the first latch and the second latch to operate synchronously (fixedly engaging the two external connectors simultaneously, or disengaging the two external connectors simultaneously). This not only makes the charging adapter of the present disclosure convenient to operate, but also helps to prevent the charging gun using the charging adapter from being unplugged during the charging process.

Although the present disclosure has been described by way of the embodiments above, the present disclosure is not to be limited to those embodiments. Any person skilled in the art can make various changes and modifications without departing from the spirit and the scope of the present disclosure. Therefore, the protective scope of the present disclosure shall be the scope of the claims as attached.

## Claims

1. A charging adapter, comprising:
an adapter main body comprising a first electrical connector and a second electrical connector, the first electrical connector and the second electrical connector being disposed on two opposite ends of the adapter main body and configured to be connected to a first external connector and a second external connector, respectively;
a first latch movably disposed on the adapter main body and comprising a button and an engaging structure, the engaging structure being connected to the button and configured to fixedly engage the first external connector;
a second latch movably disposed on the adapter main body and configured to fixedly engage the second external connector; and
a synchronizing mechanism disposed on the adapter main body and connected to the button of the first latch and the second latch, wherein the first latch and the second latch are configured to fixedly engage and disengage the first external connector and the second external connector in a synchronous manner via the synchronizing mechanism.

2. The charging adapter of claim 1, wherein the synchronizing mechanism comprises at least one translational slidable component, the at least one translational slidable component is connected to the second latch and is configured to translate in response to the button of the first latch being pressed, and the at least one translational slidable component, when translating, causes the second latch to translate.

3. The charging adapter of claim 2, wherein the first latch is located on a first side of the second electrical connector, the second latch is located on a second side of the second electrical connector, the second side is opposite to the first side, the at least one translational slidable component extends from the first side to the second side of the second electrical connector and is connected to the button of the first latch and the second latch.

4. The charging adapter of claim 3, wherein the second latch and the at least one translational slidable component collectively form a J-shaped structure.

5. The charging adapter of claim 2, wherein the at least one translational slidable component comprises a first slider and a second slider, the first slider and the second slider are connected to the button and the second latch, respectively, and each have an inclined surface, the inclined surfaces of the first slider and the second slider abut each other, wherein the first slider is configured to slide along a first direction in response to the button of the first latch being pressed, the second slider is configured to slide along a second direction in response to sliding motion of the first slider, and the second direction is at an angle to the first direction.

6. The charging adapter of claim 5, wherein the second electrical connector has a first side, a second side and a third side, the second side is opposite to the first side, the third side adjoins the first side and the second side, wherein the first latch is disposed on the first side, the second latch is disposed on the third side, wherein the second direction is substantially perpendicular to the first direction.

7. The charging adapter of claim 1, wherein the first latch and the second latch are located on the same side of the second electrical connector, the synchronizing mechanism comprises a rotatable component, the rotatable component comprises a pivot portion, a first swing arm and a second swing arm, the first swing arm and the second swing arm are connected to the button of the first latch and the second latch, respectively, and are located on different sides of the pivot portion.

8. The charging adapter of claim 1, wherein the first latch and the second latch are located on different sides of the second electrical connector, the synchronizing mechanism comprises a slidable component and a rotatable component, the rotatable component comprising a pivot portion and a swing arm, the swing arm is connected to the second latch and is connected to the button of the first latch via the slidable component.

9. The charging adapter of claim 1, wherein the synchronizing mechanism is arranged along a periphery of the second electrical connector.

10. The charging adapter of claim 1, wherein the first latch is an integrally formed component, and the engaging structure and the button are located on two opposite ends of the first latch.

11. The charging adapter of claim 1, wherein the second electrical connector has a socket and a side opening, the socket is configured to receive the second external connector, the side opening communicates with the socket, the second latch is configured to extend into the socket via the side opening and fixedly engage the second external connector.

12. The charging adapter of claim 11, further comprising an elastic component disposed on the adapter main body, the elastic component is connected to the second latch and is configured to provide a force to push the second latch into the side opening.
